# EUROPÄISCHE PATENTSCHRIFT

(11) **EP 2 110 196 B1**
(45) Veröffentlichungstag und Bekanntmachung des Hinweises auf die Patenterteilung: **18.01.2017**
(21) Anmeldenummer: 09005412.3
(22) Anmeldetag: 16.04.2009
(51) Int. Cl.: B23K 11/087, B23K 11/25

(54) **Verfahren und Schweissvorrichtung zur Ermittlung der anzuwendenden Schweissstromstärke beim Behälterzargenschweissen**
Method and welding device for determining the welding electric current to be applied during welding of can bodies
Procédé et dispositif de soudage destiné à déterminer le courant de soudage pour des joints de corps de boîte

(30) Priorität: 17.04.2008 CH 6052008
(43) Veröffentlichungstag der Anmeldung: 21.10.2009
(73) Patentinhaber: Soudronic AG, 8962 Bergdietikon (CH)
(72) Erfinder: Ziegler, Patrick, 5621 Zufikon (CH)
(74) Vertreter: Schalch, Rainer

(56) Entgegenhaltungen:
- EP-A1- 0 761 368
- EP-A2- 0 502 478
- US-A- 4 376 883

## Beschreibung

### Hintergrund

Die Erfindung betrifft ein Verfahren gemäß dem Oberbegriff des Anspruchs 1 zur Ermittlung der anzuwendenden Schweissstromstärke für das Widerstandsnahtschweissen von aufeinander folgenden Behälterzargen. Ferner betrifft die Erfindung eine Schweissvorrichtung gemäß dem Oberbegriff des Anspruchs 10 zur Widerstandsnahtschweissung von Behälterzargen, mit Schweissrollen, einem Schweissstromgenerator und einer Schweissstromsteuerung.

### Stand der Technik

Für die Einstellung der Schweissstromstärke für das Widerstandsnahtschweissen von Behälterzargen ist es üblich, Probeschweissungen mit kleinen Zargenserien aus dem jeweiligen zu schweissenden Blechmaterial durchzuführen, wobei, wie in der Produktion, mit konstanter Schweissstromstärke des üblicherweise verwendeten Schweisswechselstroms gearbeitet wird. Die geschweissten Zargen einer solchen kleinen Serie werden dann durch mechanische Festigkeitskontrolle (z.B. Aufreissen der geschweissten Überlappnaht) und visuelle Kontrolle untersucht. Ist die Schweissstromstärke bei der Probeschweissung zu tief eingestellt gewesen, bzw. war die Schweisstemperatur zu tief, so geht die Naht leicht auf, da keine genügende Materialaufschmelzung erzielt worden ist, was auch als "Kleben" bezeichnet wird. Ist hingegen die Schweissstromstärke bei der Probeschweissung zu hoch eingestellt, so erfolgt die Schweissung mit zu hoher Temperatur und es entstehen im Schweissbereich Krater und flüssiges Zargen- oder Schweisselektrodenmaterial lagert sich als "Spritzer" entlang der Naht ab. Dies kann die Zarge für die weitere Verwendung unbrauchbar machen. Nach solchen Probeschweissungen, bei welchen von der Bedienungsperson in der Regel sowohl Testzargen mit "klebenden" Schweissnähten als auch Testzargen mit Schweissnähten mit Spritzern erzeugt werden, wird dann die Schweissstromstärke für die Serienproduktion von Zargen aus dieser Blechsorte festgelegt. Dabei wird die Schweissstromstärke im Bereich zwischen "Kleben" und "Spritzern" mit ca. 2/3 Abstand vom zu tiefen Wert und somit ca. 1/3 Abstand vom zu hohen Wert eingestellt. Bei diesem iterativen Vorgehen sind der Zeitaufwand und der Materialverbrauch durch die Probeserien stark von der Grösse des Schweissbereichs des Zargenmaterials und der Erfahrung der Bedienungsperson der Zargenschweissmaschine abhängig. EP 0 761 268 offenbart ein Verfahren zur Ermittlung der anzuwendenden Schweissstromstärke gemäß dem Oberbegriff des Anspruchs 1 sowie eine Vorrichtung für die Widerstandsnahtschweissung von Behälterzargen gemäß dem Oberbegriff des Anspruchs 10.

### Darstellung der Erfindung

Der Erfindung liegt die Aufgabe zu Grunde, ein besseres und somit in der Regel rascheres und jedenfalls Material sparenderes Verfahren gemäß Anspruch 1 zur Ermittlung der geeigneten Schweissstromstärke zu schaffen. Ferner liegt der Erfindung die Aufgabe zu Grunde, eine Schweissvorrichtung gemäß Anspruch 10 zur Durchführung des Verfahrens zu schaffen.

Diese Aufgabe wird bei dem eingangs genannten Verfahren dadurch gelöst, dass mindestens eine Testzarge mit während der Schweissung fallender oder steigender Schweissstromstärke geschweisst wird, und dass bei der Schweissung erfasst wird, wo auf der Naht welche Schweissstromstärke wirksam geworden ist. Die Aufgabe wird ferner bei der Schweissvorrichtung der eingangs genannten Art dadurch gelöst, dass durch die Steuerung und den Schweissstromgenerator die Schweissstromstärke während der Schweissung der Naht einer Behälterzarge änderbar und deren Wert entlang der Nahtlänge der Zarge erfassbar und somit speicherbar ist.

Die Testzarge weist somit eine Naht auf, die entlang ihrer Nahtlänge mit verschieden hoher Schweissstromstärke geschweisst worden ist. Ein ganzer Stromstärkebereich, welcher bevorzugt den Bereich vom "Kleben" bis zur Erzeugung von "Spritzern" umfasst, kann auf die Naht dieser einen Zarge "abgebildet" werden oder allenfalls auf zwei Zargen. Die mechanische und optische, insbesondere visuelle, Untersuchung dieser Zarge ergibt somit in der Regel entlang ihrer Naht einen Nahtbereich, der mit geeigneter Schweissstromstärke geschweisst worden ist. Ist dies nicht der Fall, so kann allenfalls eine zweite Testzarge mit anderem Stromstärkebereich auf die erfindungsgemässe Weise erzeugt werden. Da somit jeweils die Schweissstromstärke als Wert bekannt ist, die entlang der Nahtlänge aufgebracht worden ist, kann aus der Lage des korrekt geschweissten Bereichs auf der Testzarge die entsprechende Schweissstromstärke ermittelt werden, bzw. innerhalb des korrekt geschweissten Bereichs kann eine Stelle der Naht ausgewählt werden (z.B. eine Stelle, die den Bereich zwischen "Kleben" und "Spritzern" im Verhältnis 2/3 zu 1/3 teilt) und die an dieser Stelle wirksam gewesene Schweissstromstärke kann bestimmt, insbesondere aus der Rampe des Schweissstromverlaufs abgelesen oder aus dem Speicher ausgelesen werden. Diese Schweissstromstärke kann dann für die Serienproduktion als ermittelter Schweissstromwert für die Schweissung mit diesem konstanten Stromstärkewert verwendet werden.

Bei einer bevorzugten Ausführungsform erfolgt die Stromstärkevariation entlang der Naht der Testzarge nicht stetig sondern mit mindestens einem Knickpunkt und verschiedenen Steigungen beidseits des Knickpunktes. Dies erlaubt es bei der Testzarge im Bereich der grossen Schweissstromstärke mit einer geringeren Steigung der Stromstärkeänderung zu fahren und im Bereich der kleineren Schweissstromstärke mit einer steileren Steigung der Stromstärkeänderung. Dies ergibt eine bessere Erkennung der "Spritzergrenze" und eine gute Aufreissbarkeit der Naht im Bereich des "Klebens". Bevorzugt erfolgt die Schweissung anfänglich mit grosser Stromstärke und somit mit entlang der Naht fallender Schweissstromstärke. Weiter ist es bevorzugt, wenn der Schweissstrom erst in einem vorbestimmten Abstand, z.B. 5 bis 10 Millimeter, vom Zargenanfang gestartet wird, damit allfällige Schwingungen der Schweissrollen oder Jittereffekte eine Messung der Schweissstromstärke entlang der Naht nicht verfälschen.

Bei der Schweissung von Produktionsserien von Behälterzargen mit elektrischem Widerstandsnahtschweissen bei Behälterzargen mit nicht gleichmässiger Überlappung kann ebenfalls so vorgegangen werden, dass in der Produktion bei jeder solchen Zarge eine entlang deren Naht fallende oder steigende Schweissstromstärke verwendet wird. Dies erlaubt die Schweissung in den Bereichen mit grosser Überlappung mit grösserer Stromstärke als in den Bereichen mit kleinerer Überlappung der Zargenränder, wo dann mit geringerer Stromstärke geschweisst wird. Die Bestimmung des dafür optimalen Schweissstromstärkeverlaufs erfolgt bevorzugt mit dem Verfahren gemäss der Erfindung. Dafür wird mit diesem Verfahren (also mit fallender oder steigender Schweissstromstärke) auf zwei oder mehreren Zargen mit der unterschiedlichen Überlappung der optimale Stromstärkewert für die Schweissung im Bereich grosser und im Bereich geringer Überlappung bestimmt. Die Schweissstromstärke für die Produktion wird dann als in der Regel rampenförmiger Stromstärkeverlauf gewählt, der diese beiden Stromstärkewerte verbindet.

### Kurze Beschreibung der Zeichnungen

Im Folgenden werden Ausführungsbeispiele der der Erfindung anhand der Zeichnungen näher erläutert. Dabei zeigt
Figur 1 eine schematische Ansicht einer Schweissnaht einer Behälterzarge und des Verlaufs der Schweissstromstärke (z.B. in Ampere) über der Naht oder über die Zeit;
Figur 2 eine weitere schematische Darstellung einer Schweissnaht einer Behälterzarge und des Verlaufs der Schweissstromstärke zur Erläuterung eines bevorzugten Ausführungsbeispiels der Erfindung;
Figur 3 schematisch eine Schweissvorrichtung zur Widerstandsnahtschweissung von Behälterzargen gemäss den Aspekten der Erfindung; und
Figur 4 eine weitere schematische Darstellung einer Schweissnaht einer Behälterzarge und des Verlaufs der Schweissstromstärke zur Erläuterung des zweiten Aspekts der Erfindung.

### Wege zur Ausführung der Erfindung

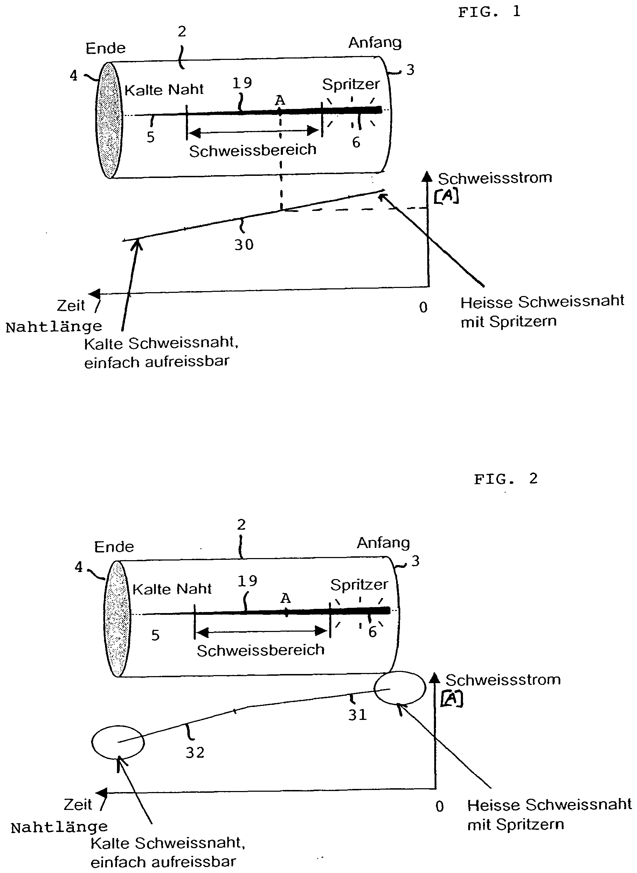

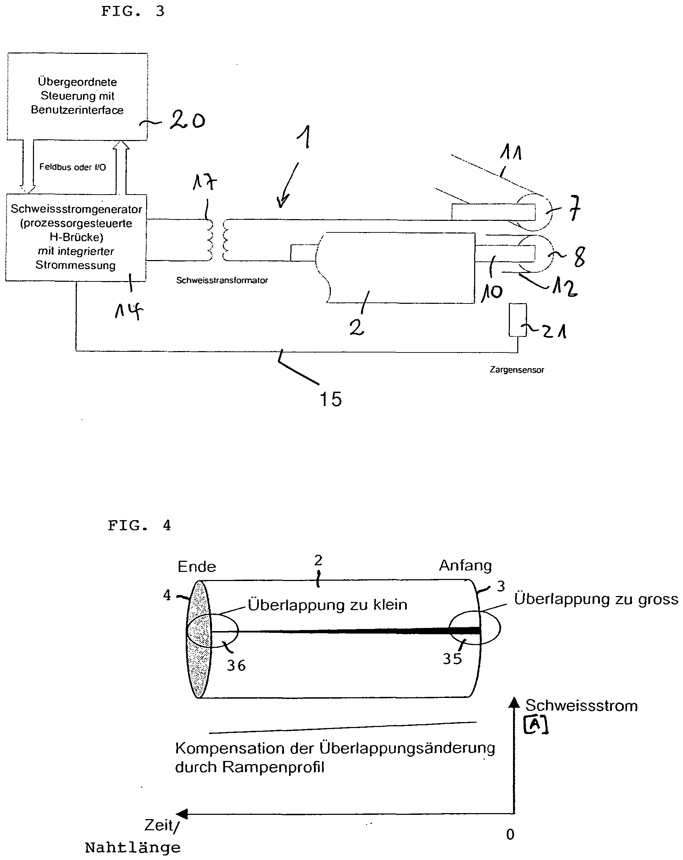

Figur 1 zeigt schematisch eine Testbehälterzarge 2, welche zur Ermittlung des geeigneten Schweissstromstärkewertes für die Serienproduktion von Zargen aus dem selben Blechmaterial wie die Testzarge dient, oberhalb eines Diagramms, welches die Schweissstromstärke entlang der Nahtlänge der Testzarge 2 oder entsprechend über der zu deren Schweissung benötigten Zeit darstellt. Die Testzarge 2 wird auf einer Widerstandsnahtschweissmaschine bzw. Rollnahtschweissmaschine geschweisst, wie dies anhand von Figur 3 noch näher erläutert wird. Gemäss der Erfindung wird nun die Stärke des Schweissstromes während der Testschweissung der Zarge 2 entlang der Überlappschweissnaht fallend oder ansteigend geändert. In dem gezeigten Beispiel fällt die Schweissstromstärke 30 während der Schweisszeit bzw. über die Nahtlänge ab und verringert sich somit von einem Anfangswert zu einem Schlusswert. Der Schweissstrom ist dabei auf bekannte Weise beim Behälterzargenschweissen ein Wechselstrom, in der Regel mit höherer Frequenz als der Netzspannungsfrequenz, was dem Fachmann bekannt ist und hier nicht weiter erläutert wird. Neu ist aber, dass bei der Schweissung der Testzarge die Stromstärke des in die Überlappungsnaht der Testzarge eingebrachten Schweissstroms geändert wird. Damit kann entlang der Schweissnaht der Testzarge 2 von deren Anfang 3 bis zu deren Ende 4 (auf die Transportrichtung der Zarge bezogen) eine Überlappungsschweissnaht erzeugt werden, bei welcher sowohl ein Bereich 6 mit zu hoher Schweisstemperatur und dem Auftreten von "Spritzern" gebildet wird, als auch ein Bereich 5 mit zu tiefer Schweisstemperatur, bei der eine kalte Schweissnaht bzw. eine sogenannte "klebende" Naht erzeugt wird, welche keine genügende Verschweissung ergibt. Zwischen diesen Bereichen 6 und 5 liegt dann durch die Änderung der Schweissstromstärke ein Schweissbereich 19, in welchem eine Verschweissung ohne Spritzer und mit genügender Schweisstemperatur erzeugt wird. Bei der gezeigten Darstellung wird die höhere Schweissstromstärke am Anfang der Zarge verwendet und der Schweissstrom 30 bzw. dessen Stärke fällt zum Ende der Naht bzw. zum Ende 4 der Zarge hin ab. Natürlich wäre auch ein umgekehrtes Vorgehen möglich, bei welchem mit einer geringen Schweissstromstärke am Anfang 3 der Zarge begonnen wird und die Schweissstromstärke entlang der Naht ansteigt. Dann würde sich der Bereich 5 am Anfang 3 der Zarge befinden und der Spritzerbereich 6 am Ende 4 der Zarge. Dazwischen würde wieder ein korrekter Schweissbereich 19 gebildet. Auf die erfindungsgemässe Weise kann somit eine Testzarge 2 gebildet werden, welche den gesamten Schweissstrombereich von zu hoher Schweissstromstärke bis zu zu geringer Schweissstromstärke auf die Naht der einen Testzarge 2 abbildet. Sollte die Bedienungsperson die Anfangseinstellung der Schweissstromstärke so falsch gewählt haben, dass diese Abbildung nicht gelingt, so ist gegebenenfalls eine weitere Testzarge mit einem tieferen oder höheren Anfangswert der Schweissstromstärke auszuführen, so dass im Diagramm des Stromstärkeverlaufs die Rampe parallel nach unten oder nach oben verschoben wäre. Allenfalls kann auch die Steigung der Schweissstromstärke 30 entlang der Nahtlänge bzw. über die Schweisszeit einstellbar sein, indes ist es bevorzugt, wenn eine vorgegebene Steigung der Rampe in der Steuerung eingegeben ist. Ist eine Testzarge 2 entsprechend Figur 1 mit den Nahtbereichen 6, 5 und 19 erzeugt worden, so kann aufgrund einer optischen bzw. visuellen Prüfung auf das Vorliegen von Spritzern die Grenze zwischen dem Bereich 6 und dem Bereich 19 bestimmt werden. Weiter kann auf bekannte Weise durch Aufreissen der Naht vom Ende 4 her der Bereich 5 bestimmt werden und dies kann allenfalls durch eine optische bzw. visuelle Betrachtung ergänzt werden. Damit wird die Grenze zwischen dem Bereich 5 und dem Bereich 19 festgelegt. Die Sollschweissstromstärke für die Produktion von Behälterzargen aus demselben Blechmaterial wie die Testzarge kann dann in den Schweissbereich 19 gelegt werden. Dies ist möglich, da bei der Erstellung der Testzarge die Schweissstromstärke 30 entlang der Nahtlänge bestimmt worden ist. Dies ist durch eine tatsächliche Messung der Schweissstromstärke entlang der Naht bei der Schweissung der Testzarge und die Speicherung der Messwerte möglich, so dass die bestimmte Schweissstromstärke der tatsächlichen Schweissstromstärke entspricht. Dies ist auch möglich, indem der in der Steuerung vorgegebene rampenförmige Soll-Verlauf der Schweissstromstärke der Naht oder Schweisszeit zugeordnet wird, so dass nicht ein Messwert sondern ein Vorgabewert für den Schweissstromgenerator bestimmt wird. Liegt also mit der Testzarge 2 der mögliche gute Schweissbereich 19 fest und wird eine Schweissung so gewünscht wie sie z.B. an der Stelle A des Bereiches 19 vorliegt, welche z.B. durch eine Drittelung der Länge des Bereiches 19 und die Festlegung des Punktes A bei einer Entfernung von einem Drittel von der Grenze zwischen den Bereichen 19 und 6 liegt, so steht mit dem Abstand des Punktes A von dem Zargenanfang bzw. dem Beginn der Schweissstromeinbringung auch fest, wie gross die Stromstärke bei der Schweissung an der Stelle A gewesen ist. Diese, wie gesagt durch Messung bestimmte oder an Hand der Sollvorgabe der Stromstärke entlang der Schweissnaht bestimmte, Schweissstromstärke an der Stelle A der Naht kann z. B. durch Eingabe der Nahtlänge vom Zargenanfang 3 bis zum Punkt A aus dem Messwertspeicher oder aus dem die Vorgabewerte der Rampe enthaltenden Speicher abgerufen werden, da gemäss der Erfindung die Stromstärkewerte entlang der Naht bestimmt sind. Es kann somit durch eine einfache Längenmessung mit einem Massstab die Länge vom Zargenanfang 3 bis zum Punkt A festgestellt und damit der für die Produktion geeignete Schweissstrom ermittelt werden. Dieser kann dann an der Schweissmaschine für die Serienproduktion eingestellt werden oder kann direkt aus dem Speicher entnommen werden, in welchem die Erfassung bei der Testschweissung erfolgt ist oder in welchem die Sollvorgabe entlang der Naht abgelegt ist. Da Nahtlänge und Zeit bei der vorgegebenen Schweissgeschwindigkeit der Schweissmaschine in einer festen Beziehung zueinander stehen, kann bei der Erfassung entweder die Schweisszeit erfasst werden oder es kann die Nahtlänge z.B. über den Drehwinkel der Schweissrollen während er Schweissung der Testzarge 2 bestimmt werden oder über die Länge einer dabei benutzten Drahtzwischenelektrode 11, 12 (Figur 3).

Bei einer bevorzugten Ausführungsform wird so vorgegangen, dass mit dem hohen Strom begonnen wird, wie dies in Figur 1 dargestellt ist. Ferner ist es bevorzugt, dass der Strom erst nach dem Zargenbeginn an die Schweissrollen angelegt wird, und zwar bevorzugterweise ca. 5-10 mm nach dem Zargenanfang 3, damit anfällige Einschwingbewegungen oder fehlerhafte Synchronisationseinstellungen die Messung des Schweissstromes nicht beeinflussen können. Die Schweissmaschine kann dazu mit einer Detektion des Zargenanfanges 3 ausgestattet sein, wie dies noch erläutert wird. Bevorzugt wird ferner der Schweissstrom kurz vor dem Ende 4 der Zarge 2 abgeschaltet. Dies erleichtert das Aufreissen der Naht bei der mechanischen Inspektion.

Figur 2 zeigt ein weiteres bevorzugtes Ausführungsbeispiel, wobei die vorstehenden Erläuterungen auch hier gelten. Gleiche Bezugszeichen bezeichnen auch wiederum gleiche Elemente. Bei dieser Ausführungsform wird nicht mit einem konstant abfallenden oder ansteigenden Strom 30 geschweisst, sondern mit einem Stromverlauf, welcher mindestens zwei verschiedene Steigungen und entsprechend einen Knickpunkt (wie dargestellt) oder mehrere Knickpunkt aufweist. In Figur 2 sind die beiden Abschnitte 31 und 32 des Stromstärkeverlaufs über die Nahtlänge bzw. Schweisszeit dargestellt. Im Bereich des höheren Stromes ist dabei die Steigung der abfallenden Rampe geringer und im Bereich des tieferen Stromes 32 ist die Steigung grösser. Dadurch kann erreicht werden, dass die Spritzergrenze zwischen den Bereichen 6 und 19 auf der Naht mit höherer Auflösung auf der Naht ersichtlich ist und die Naht am Ende 4 trotzdem gut aufgerissen werden kann, um den Bereich 5 festzulegen.

Figur 3 zeigt schematisch eine Widerstandsnahtschweissmaschine oder Rollnahtschweissmaschine 1, welche die beiden Schweissrollen 7 und 8 aufweist, zwischen denen die Naht der Zarge 2 auf bekannte Weise geschweisst wird. Auf den Schweissrollen können Drahtzwischenelektroden 11 bzw. 12 laufen. Die untere Schweissrolle 8 ist an einem Schweissarm 10 gelagert und wird über die Leitung 15 von dem Schweissstromgenerator 14 über den Schweisstransformator 17 gespiesen. Durch einen Sensor 21, insbesondere einen berührungslos arbeitenden Sensor oder auch durch eine in den Schweissstromgenerator integrierte Detektion, kann dieser erkennen, wenn die Zarge 2 zwischen die Schweissrollen gelangt ist. Der Schweissstromgenerator steuert dann das Anlegen des Schweissstromes über die Leitung 1 an die obere Schweissrolle 7. Damit kann insbesondere auch das verzögerte Anlegen des Schweissstromes in einem kleinen Abstand vom Zargenanfang gesteuert werden. Die Steuerung 20 kann ferner den Schweissstromgenerator 14 steuern und diesem den gewünschten rampenförmigen Verlauf des Schweissstromes aufprägen, der in diesem Fall in der Steuerung als Vorgabewert enthalten ist. Der rampenförmige Verlauf kann aber auch im Schweissstromgenerator selber abgelegt und durch ein externes Signal für die Testzargenschweissung aktivierbar sein. Ein prozessorgesteuerter Schweissstromgenerator, der ein erfindungsgemässes Vorgehen ermöglicht, ist ein Schweissstromgenerator vom Pulsar oder Unisoud der Firma Soudronic, Bergdietikon, Schweiz. Die Steuerung erfasst ferner die Schweisszeit für die Testzarge oder die geschweisste Nahtlänge, wie dies bereits erläutert worden ist. Die Steuerung 20 kann ferner auch die über die Zeit bzw. die Nahtlänge an die Schweissrollen abgegebene Stromstärke ermitteln, sei dies durch Messung oder durch Vergleich der Schweisszeit bzw. Schweissnahtlänge mit dem Stromstärkesollwert entsprechend der Rampe. In Figur 3 ist als Variante dargestellt, dass die Leitungen von der Steuerung 20 zum Generator 14 auch in Gegenrichtung ein Stromstärkeausgangssignal des Generators an die Steuerung 20 liefern können. Alternativ kann eine separate Stromstärkemesseinrichtung 26 vorgesehen sein, welche die Stärke des Schweissstromes an die Steuerung liefert, womit diese erfasst und der Schweisszeit oder der Nahtlänge zugeordnet wird. Alternativ wird anstelle der Messung mit der Sollwertrampe in der Steuerung oder dem Generator für die Testzargenschweissstromstärke gearbeitet. Durch Ermittlung eines bevorzugten Ortes A im korrekten Schweissbereich 19 auf der Schweissnaht der Testzarge 2 kann diesem dann, wie erläutert, die entsprechende Schweissstromstärke gemäss den Rampen 30 oder 31, 32 zugeordnet werden, die gemessene Rampen oder vorgegebene Stromstärkesollwertrampen sind. Dieser eine Stromstärkewert wird dann von der Steuerung 20 als Schweissstromsollwert für die Schweissung der Produktionsserie von Behälterzargen verwendet. Dabei wird dann auf bekannte Weise mit konstantem, nicht abfallendem bzw. nicht ansteigendem Schweissstrom mit der ermittelten Schweissstromstärke geschweisst. Damit liegen die Produktionsschweissnähte im optimalen Bereich entsprechend dem Punkt A auf der Schweissnaht der Testzarge.

Anhand der Figuren 3 und 4 kann ein weiterer Aspekt erläutert werden, welcher anhand von Figur 4 als Verfahren erläutert wird und mit der Schweissvorrichtung von Figur 3 ausgeführt werden kann. Es kann sich ergeben, dass bei der Produktion der Zargenrohlinge (durch Zuschnitt der Bleche und bei der Rundung zum Zargenrohling) die Überlappung der sich überlappenden Randbereiche der Dosenzarge entlang der zu bildenden Schweissnaht nicht gleichmässig verläuft. In der Figur 4 ist eine entsprechende Zarge schematisch dargestellt, wobei am Zargenanfang 3 mindestens im Bereich 35 die Überlappung zu gross ist und am Zargenende 4 mindestens im Bereich 36 die Überlappung zu klein ist. Auf herkömmliche Weise lassen sich solche Dosenzargen kaum mit genügender Qualität schweissen, da die konstante Produktionsschweissstromstärke in die grosse Überlappung in der Regel zuwenig Energie einbringen kann, so dass sich dort eine zu kalte Schweissung ergibt, und andererseits die konstante Schweissstromstärke in die zu kleine Überlappung zuviel Energie einbringt, so dass sich dort der Effekt von einer Schweissung mit zu grosser Temperatur und Spritzern zeigt. Gemäss dem zweiten Aspekt der Erfindung wird nun so vorgegangen, dass die Schweissung in der Produktion mit einer entsprechend abfallenden Schweissstromstärke erfolgt, wie dies in Figur 4 unterhalb der Zarge dargestellt ist, wobei wiederum auf der vertikalen Achse die Schweissstromstärke dargestellt ist und auf der horizontalen Achse die Schweisszeit oder die Nahtlänge. Würde der Überlappungsfehler der Dosenzarge 2 anders verlaufen, so dass am Anfang 3 eine zu geringe Überlappung vorhanden wäre und am Ende 4 eine zu grosse Überlappung, so müsste die Schweissstromstärke entsprechend ansteigend verlaufen, anstatt, wie in Figur 4 gezeigt, abfallend. Die Schweissmaschine von Figur 3 ist mit der Steuerung 20 und dem Schweissstromgenerator 14 (der wiederum z.B. ein Schweissstromgenerator des Typs Pulsar oder Unisoud der Firma Soudronic AG, Bergdietikon, Schweiz, ist) entsprechend dem zweiten Aspekt der Erfindung ausgestaltet, so dass sie in der Serienproduktion für jede Zarge der rasch aufeinander folgenden Zargen eine entsprechend abfallende oder ansteigende Schweissstromstärke über die jeweilige Naht erzeugt.

Zur Ermittlung der gewünschten Schweissstromstärke am Anfang und am Ende der Naht wird bevorzugterweise das anhand der Figuren 1 bis 3 erläuterte Verfahren des ersten Aspekts der Erfindung verwendet. Dabei wird mit diesem erläuterten Verfahren, das auf zwei oder mehrere Zargen angewendet wird für den Zargenanfang und das Zargenende mit der nicht übereinstimmenden Überlappungsbreite ein jeweils anderer optimaler Strom ermittelt. Diese beiden Stromwerte für den Anfang und das Ende der Schweissnaht werden dann in der Serienproduktion der Zargen mit dem in Figur 4 dargestellten Schweissstromrampenprofil gefahren, womit die Überlappungsabweichung kompensiert werden kann. Die optimalen Schweissströme für den Zargenanfang und das Zargenende können aber auch auf herkömmliche Weise durch das Schweissen von Zargentestserien mit verschiedenen konstanten Schweissströmen ermittelt werden.

Zur Ermittlung der Schweissstromstärke für die Widerstandsnahtschweissung der Überlappnaht von Behälterzargen wird somit gemäss der Erfindung bei einer Testzarge eine Schweissung mit sich ändernder Schweissstromstärke durchgeführt, die bei der Testzarge eine sich ändernde Verschweissung der Naht ergibt, die von der Schweissung mit zu hoher Temperatur bis zur Schweissung mit zu tiefer Temperatur bei dieser Naht reicht. Dabei wird die Schweissstromstärke für die Bildung der Schweissung erfasst (durch Messung oder aus der Vorgabe), so dass erfasst ist, an welcher Stelle der Naht mit welcher Stärke des Schweissstromes geschweisst wird. Mittels einer mechanischen und/oder optischen Prüfung der Schweissnaht kann dann einfach festgestellt werden, wo die Naht eine korrekte, für die Serienproduktion von Behälterzargen aus demselben Blechmaterial wie die Testzarge geeignete Verschweissung aufweist. Ist eine solche Stelle oder ein solcher Bereich der Naht bekannt, so kann die dabei bei der Testschweissung erfasste Schweissstromstärke für die Serienproduktion mit der Schweissung mit konstanter Schweissstromstärke übernommen werden.

Auch eine Bedienungsperson der Widerstandsnahtschweissmaschine mit wenig Erfahrung in der Schweisstechnik kann mit der Erfindung ohne besonderes Wissen über die Systemeigenschaften (z.B. Produktionsgeschwindigkeit, Schweissdruck) und die Beschaffenheit des zu verarbeitenden Blechmaterials in kurzer Zeit eine qualitative Aussage darüber machen, wo der Schweissbereich für die Produktionsserie liegt (minimale, maximale und optimale Schweissstromstärke). Da für die Ermittlung nur ein bis zwei Testzargen benötigt werden, erfordert das erfindungsgemässe Vorgehen deutlich weniger Zeit und Material als das herkömmliche Vorgehen.

## Patentansprüche

1. Verfahren zur Ermittlung der anzuwendenden Schweissstromstärke für das elektrische Widerstandsnahtschweissen von Überlappnähten aufeinander folgender Behälterzargen, **dadurch gekennzeichnet, dass** mindestens eine Testzarge (2) mit während der Nahtschweissung fallender oder steigender Schweissstromstärke (30; 31, 32) geschweisst wird, wobei bestimmt wird, wo auf der Naht welche Schweissstromstärke wirksam geworden ist.

2. Verfahren nach Anspruch 1, **dadurch gekennzeichnet, dass** die Schweissstromstärke über die Schweissdauer für die Naht bestimmt wird.

3. Verfahren nach Anspruch 1, **dadurch gekennzeichnet, dass** die Schweissstromstärke über die Nahtlänge bestimmt wird, insbesondere über den Drehwinkel mindestens einer Schweissrolle (7, 8) oder über die Länge einer zur Schweissung verwendeten Drahtzwischenelektrode (11, 12).

4. Verfahren nach einem der Ansprüche 1 bis 3, **dadurch gekennzeichnet, dass** die Schweissstromstärke über die Nahtlänge im Wesentlichen linear abfallend oder ansteigend gewählt wird.

5. Verfahren nach einem der Ansprüche 1 bis 4, **dadurch gekennzeichnet, dass** die Schweissstromstärke mindestens zwei Bereiche (31, 32) mit unterschiedlicher Steigung des Abfallens oder Ansteigens aufweist.

6. Verfahren nach einem der Ansprüche 1 bis 5, **dadurch gekennzeichnet, dass** der Schweissstrom erst in einem vorbestimmten Abstand vom Zargenanfang (3) angelegt wird.

7. Verfahren nach einem der Ansprüche 1 bis 6, **dadurch gekennzeichnet, dass** auf der Nahtlänge einer Testzarge (2) ein Schweissstrom aufgebracht wird, dessen Schweissstromstärke im Bereich von einer für die Naht der Testzarge zu hohen Schweissstromstärke bis zu einer für die Naht der Testzarge zu tiefen Schweissstromstärke liegt.

8. Verfahren nach einem der Ansprüche 1 bis 7, **dadurch gekennzeichnet, dass** die Schweissstromstärke für die Produktion ausgewählt wird, indem eine korrekt geschweisste Stelle (A) auf der Testzarge (2) durch mechanische und/oder optische, insbesondere visuelle, Prüfung der Testzarge bestimmt wird, und dass die der Lage dieser Stelle (A) auf der Schweissnaht entsprechende Schweissstromstärke bestimmt wird.

9. Verfahren zur Schweissung von Produktionsserien von Behälterzargen durch elektrische Widerstandsnahtschweissung auf einer Schweissmaschine, wobei die Schweissstromstarke für die Produktion durch das Verfahren nach einem der Ansprüche 1 bis 8 ermittelt wird.

10. Schweissvorrichtung (1) für die Widerstandsnahtschweissung von Behälterzargen (2), umfassend Schweissrollen (7, 8), einen Schweissstromgenerator (14) und eine Schweissstromsteuerung (20), wobei durch die Schweissstromsteuerung und den Schweissstromgenerator die Schweissstromstärke während der Schweissung einer Behälterzarge änderbar und deren Wert entlang der Naht dieser Behälterzarge erfassbar ist, **dadurch gekennzeichnet, dass** der Schweissstrom mit einer vorbestimmten Verzögerung nach dem Eintritt der Zarge zwischen die Schweissrollen an diese anlegbar ist.

11. Schweissvorrichtung nach Anspruch 10, **dadurch gekennzeichnet, dass** die Schweissstromstärke über die Schweissdauer erfassbar ist.

12. Schweissvorrichtung nach Anspruch 10, **dadurch gekennzeichnet, dass** die Schweissstromstärke über die Nahtlänge erfassbar ist, insbesondere über den Drehwinkel mindestens einer der Schweissrollen oder über die benutzte Länge einer zur Schweissung verwendeten Drahtzwischenelektrode (11, 12).

13. Schweissvorrichtung nach einem der Ansprüche 10 bis 12, **dadurch gekennzeichnet, dass** der Schweissstrom mit linear abfallender oder ansteigender Stromstärke erzeugbar ist.

14. Schweissvorrichtung nach einem der Ansprüche 10 bis 13, **dadurch gekennzeichnet, dass** der Schweissstrom entlang der Naht einer Zarge mit mindestens zwei stromstärkebereichen (31, 32) mit unterschiedlicher Steigung des Abfallens oder Ansteigens der Stromstärke erzeugbar ist.

## Claims

1. Method for determining the welding current power to be applied for electrical resistance seam welding of overlapping seams of consecutive container bodies, **characterized in that** at least one test container body (2) is welded with a decreasing or increasing welding current power (30; 31, 32) during seam welding, wherein it is determined where on the seam which welding current power was effective.

2. Method according to claim 1, **characterized in that** the welding current power is determined over the welding duration for the seam.

3. Method according to claim 1, **characterized in that** the welding current power is determined over the seam length, particularly over the rotation angle of at least a welding roller (7, 8) or over the length of an intermediary wire electrode (11, 12) used for welding.

4. Method according to one of the claims 1 to 3, **characterized in that** the welding current power is chosen substantially linearly decreasing or increasing over the seam length.

5. Method according to one of the claims 1 to 4, **characterized in that** the welding current power has at least two areas (31, 32) with different slope of the decrease or increase.

6. Method according to one of the claims 1 to 5, **characterized in that** the welding current is applied only at a predefined distance from the beginning of the container body (3).

7. Method according to one of the claims 1 to 6, **characterized in that** a welding current is applied on the seam length of a test container body (2), the welding current power of which is in the range of a too high welding current power for the seam of the test container body up to a too low welding current power for the seam of the test container body.

8. Method according to one of the claims 1 to 7, **characterized in that** the welding current power for production is chosen by determining a correctly welded position (A) on the test container body (2) by mechanical and/or optical, particularly visual, verification of the test container body, and **in that** the welding current power corresponding to the location of this position (A) on the welding seam is determined.

9. Method for welding production series of container bodies by electrical resistance seam welding on a welding machine, wherein the welding current power for production is determined by the method according to one of the claims 1 to 8.

10. Welding device (1) for resistance seam welding of container bodies (2), comprising welding rollers (7, 8), a welding current generator (14) and a welding current controller (20), wherein the welding current power is adjustable during welding of a container body by the welding current controller and the welding current generator and its value along the seam of this container body is detectable, **characterized in that** the welding current is applied to the container body with a predefined delay after the container body has entered between the welding rollers.

11. Welding device according to claim 10, **characterized in that** the welding current power is detectable over the welding duration.

12. Welding device according to claim 10, **characterized in that** the welding current power is detectable over the seam length, particularly over the rotation angle of at least one of the welding rollers or over the spent length of an intermediary wire electrode (11, 12) used for welding.

13. Welding device according to one of the claims 10 to 12, **characterized in that** the welding current is generated with a linearly decreasing or increasing current power.

14. Welding device according to one of the claims 10 to 13, **characterized in that** the welding current is generated along the seam of a container body with at least two current power ranges (31, 32) with different slope of the decrease or increase of the current power.

## Revendications

1. Procédé pour déterminer la puissance de courant de soudage à appliquer pour le soudage par résistance électrique des joints à recouvrement des corps de récipient consécutifs, **caractérisé en ce qu'**au moins un corps de récipient de test (2) est soudé avec une puissance de courant de soudage (30; 31, 32) décroissante ou augmentante pendant le soudage du joint et il est déterminé où sur le joint quelle puissance de courant de soudage a été effective.

2. Procédé selon la revendication 1, **caractérisé en ce que** la puissance de courant de soudage est déterminée avec la durée de soudage pour le joint.

3. Procédé selon la revendication 1, **caractérisé en ce que** la puissance de courant de soudage est déterminée avec la longueur du joint, particulièrement avec l'angle de rotation d'au moins un rouleau de soudage (7, 8) ou avec la longueur d'une fil-électrode intermédiaire (11, 12) utilisée pour le soudage.

4. Procédé selon l'une des revendications 1 à 3, **caractérisé en ce que** la puissance de courant de soudage est choisie essentiellement de sorte qu'elle décroît ou augmente linéairement avec la longueur du joint.

5. Procédé selon l'une des revendications 1 à 4, **caractérisé en ce que** la puissance de courant de soudage a au moins deux régions (31, 32) avec des différentes pentes de décroissance ou augmentation.

6. Procédé selon l'une des revendications 1 à 5, **caractérisé en ce que** le courant de soudage est appliqué uniquement à une distance prédéfinie du début du corps de récipient (3).

7. Procédé selon l'une des revendications 1 à 6, **caractérisé en ce qu'**un courant de soudage est appliqué sur la longueur de joint d'un corps de récipient de test (2), la puissance de courant de soudage duquel est comprise entre une puissance de courant de soudage trop élevée pour le joint du corps de récipient de test et une puissance de courant de soudage trop faible pour le joint du corps de récipient de test.

8. Procédé selon l'une des revendications 1 à 7, **caractérisé en ce que** la puissance de courant de soudage pour la production est choisie en déterminant une position (A) soudée correctement sur le corps de récipient de test (2) par vérification mécanique et/ou optique, particulièrement visuelle, du corps de récipient de test, et **en ce que** la puissance de courant de soudage qui correspond au lieu de cette position (A) sur le joint soudé est déterminée.

9. Procédé pour souder des séries de production des corps de récipient par soudage par résistance électrique sur une machine de soudage, la puissance de courant de soudage pour la production étant déterminée par le procédé selon l'une des revendications 1 à 8.

10. Dispositif de soudage (1) pour le soudage par résistance électrique des corps de récipient (2), comprenant des rouleaux de soudage (7, 8), un générateur de courant de soudage (14) et une commande de courant de soudage (20), la puissance de courant de soudage étant ajustable pendant le soudage d'un corps de récipient par la commande de courant de soudage et le générateur de courant de soudage et sa valeur le long du joint de ce corps de récipient étant détectable, **caractérisé en ce que** le courant de soudage est appliqué au corps de récipient avec un délai prédéfini après le corps de récipient est entrée entre les rouleaux de soudage.

11. Dispositif de soudage selon la revendication 10, **caractérisé en ce que** la puissance de courant de soudage est détectable avec la durée de soudage.

12. Dispositif de soudage selon la revendication 10, **caractérisé en ce que** la puissance de courant de soudage est détectable avec la longueur de joint, particulièrement avec l'angle de rotation d'au moins un des rouleaux de soudage ou avec la longueur épuisé d'une fil-électrode intermédiaire (11, 12) utilisé pour le soudage.

13. Dispositif selon l'une des revendications 10 à 12, **caractérisé en ce que** le courant de soudage est généré avec une puissance de courant qui décroît ou augmente linéairement.

14. Dispositif selon l'une des revendications 10 à 13, **caractérisé en ce que** le courant de soudage est généré le long du joint d'un corps de récipient avec au moins deux gammes (31, 32) de puissance de courant avec des pentes différentes du décroissance ou augmentation de la puissance de courant.
